# FASCICULE DE BREVET EUROPEEN

(11) **EP 3 775 577 B1**
(45) Date de publication et mention de la délivrance du brevet: **05.10.2022**
(21) Numéro de dépôt: 19715037.8
(22) Date de dépôt: 27.03.2019
(51) Int. Cl.: F15B 13/043, F16K 11/07, F16K 31/122, F16K 31/40

(54) **VANNE FLUIDIQUE**
FLÜSSIGKEITSVENTIL
FLUID VALVE

(30) Priorité: 28.03.2018 BE 201805206
(43) Date de publication de la demande: 17.02.2021
(73) Titulaire: Safran Aero Boosters SA, 4041 Herstal (BE)
(72) Inventeur: MAGETTE, Arnaud, 4880 Saint Jean Sart (BE); VANDENBROUCKE, Maxime, 4680 Hermée (BE); FRIPPIAT, Cédric, 4910 Theux (BE); BOMAL, Jean-Christian, 4633 Melen (BE)
(74) Mandataire: Gevers Patents
(86) Numéro de dépôt international: PCT/EP2019/057793
(87) Numéro de publication internationale: WO 2019/185755

(56) Documents cités:
- EP-A1- 3 128 215
- DE-A1- 19 632 368
- DE-B- 1 188 398
- US-A- 2 615 466

## Description

### Domaine technique

L'invention se rapporte à une vanne fluidique proportionnelle, par exemple à trois voies.

### Etat de la technique

US2004/0163721 A1 décrit une vanne fluidique comprenant un actionneur électrique solénoïde. En injectant un courant électrique dans l'actionneur solénoïde, il est possible de déplacer un pilote appelé 'push pin' d'une première position à une deuxième position. Ce pilote, qui n'est pas ferromagnétique dans US2004/0163721 A1, est connecté à une armature ferromagnétique. Un membre de vanne mobile est connecté au pilote et permet de contrôler le passage de fluide entre les canaux d'entrée et de sortie de la vanne fluidique. US2004/0163721 A1 enseigne notamment au paragraphe
que le membre de vanne est apte à se déplacer d'une manière équivalente au pilote.

La vanne décrite dans US2004/0163721 A1 présente des inconvénients. Pour certaines applications, il est souhaitable que le membre de vanne puisse décrire un grand mouvement ou une grande course. Une grande course du membre de vanne permet une régulation proportionnelle de plus gros débits. En effet, si l'on veut réguler un gros débit sur une petite course, on y perdrait en sensibilité (le même millimètre de course représenterait un delta de débit plus important). De plus, si la course n'est pas suffisante, le membre de vanne pourrait induire (même lorsque la vanne est totalement ouverte) des pertes de charge trop importantes. Or, on cherche généralement à limiter les pertes de charge aux bornes de la vanne et il faut donc que la course soit adaptée au débit qui y passe. Les applications pour lesquelles il vaut mieux adopter de grandes courses sont donc des applications de régulation proportionnelle à haut débit (par exemple à partir de 1500 L/h).

Pour la vanne de US2004/0163721 A1, certaines longues courses peuvent devenir inatteignables. D'autre part, avec ce système connu, plus la course requise du membre de vanne augmente, plus la masse de la vanne fluidique dans son entièreté augmente. Pour avoir des longues courses, il faut en effet prévoir un grand membre de vanne et/ou un grand pilote. Cela augmente le poids de la vanne fluidique. D'autre part, si les éléments mobiles (membre de vanne et pilote) sont grands, il faut alors prévoir en général un solénoïde (ou une bobine) de l'actionneur suffisamment grand pour qu'il soit apte à les déplacer : il faut prévoir un dispositif qui permet de créer une grande force sur le pilote. Il est alors souvent nécessaire de devoir alors injecter un courant électrique suffisamment important dans le solénoïde de manière à générer un champ magnétique suffisamment important pour déplacer les éléments mobiles tel le pilote.

US 2,615,466 décrit une vanne fluidique actionnée indirectement par un actionneur magnétique externe au corps de vanne. L'actionneur magnétique, en modifiant la position du pilote, modifie les pressions autour du membre de vanne, provoquant son actionnement.

DE 196 32 368 A1 décrit une vanne comprenant un pilote situé dans le membre de vanne. Le déplacement du pilote à l'intérieur du membre de vanne par un actionneur magnétique provoque une modification des pressions autour du membre de vanne provoquant son actionnement.

DE 1 188 398 décrit une vanne comprenant un pilote, le pilote étant dans une cavité longitudinale du membre de vanne de sorte qu'un déplacement du pilote entraine une modification de la pression dans la cavité longitudinale du membre de vanne.
EP3128215A1 montre, en figure 7, une version équilibrée d'une vanne fluidique. Le creux du corps de vanne comprend une cavité comprenant un actionneur et une communication (sans restriction fixe) vers une pression de référence (par exemple une haute pression). L'actionneur est donc soumis à une pression constante égale à cette pression de référence, indépendamment de sa position.

Or, pour certaines applications, par exemple aéronautiques, il est désiré d'avoir une vanne de taille et de poids limités et/ou de pouvoir utiliser un courant limité dans le solénoïde.

### Résumé de l'invention

Selon un premier aspect, un des buts de la présente invention est de fournir une vanne fluidique proportionnelle à actionneur électrique dont le membre de vanne peut décrire une grande course tout en limitant la taille et la masse de la vanne, et, le courant requis dans l'actionneur électrique.

A cet effet, les inventeurs proposent une vanne fluidique selon la revendication 1.

Un effet technique de ladite au moins une bobine et ledit pilote mobile de l'actionneur électrique solénoïde entourant au moins une portion du membre de vanne est de rendre la vanne de l'invention plus compacte et moins lourde. En effet, grâce à cette caractéristique, il est possible d'obtenir une vanne avec un actionneur électrique solénoïde et un membre de vanne imbriqués, de sorte à obtenir une vanne plus compacte ; une vanne plus compacte permet la réduction de la masse du corps de vanne.

Le pilote agit donc comme une restriction variable en fonction de sa position par rapport au membre de vanne. La restriction variable est donc fonction du degré de communication entre la cavité longitudinale et ladite première cavité, degré de communication dépendant de la position du pilote mobile relativement au membre de vanne.

Avec la vanne fluidique de l'invention, un déplacement du pilote induit une différence de pression entre les première et deuxième cavités due à la modification du degré de communication entre celles-ci. Cette différence de pression donne naissance à une force de déplacement sur le membre de vanne. Si cette force est suffisante, elle permet de déplacer le membre de vanne selon la direction principale. Comme cela est illustré dans la suite, il est possible d'obtenir un grand déplacement du membre de vanne, pour un petit déplacement du pilote par rapport au membre de vanne. La force exercée par le solénoïde sur le pilote peut rester faible alors qu'un grand déplacement du membre de vanne est en même temps possible. En effet, un petit déplacement du pilote quelle que soit la position du membre de vanne permet un grand mouvement du membre de vanne. Cela est notamment possible grâce à l'aspect bi-pilote de la vanne de l'invention, c'est-à-dire au fait que le membre de vanne comprend un matériau ferromagnétique et au fait que la vanne de l'invention est configurée de sorte qu'un déplacement relatif entre le pilote mobile et le membre de vanne est apte à induire une différence de pression entre les première et deuxième cavités, induisant un déplacement du membre de vanne qui peut être grand.

De manière un peu plus détaillée, un déplacement du pilote, même petit et induit par une faible force, peut créer une différence de pression entre ces deux cavités qui est suffisante pour déplacer le membre de vanne selon une course importante. Ainsi, le pilote ne doit pas décrire un grand déplacement pour avoir une grande course du membre de vanne et il n'est pas nécessaire d'appliquer une grande force sur le pilote. La taille du pilote peut donc être réduite ce qui permet d'avoir une vanne fluidique de poids limité. Le pilote étant de taille réduite, il n'est pas nécessaire de prévoir un actionneur électrique très puissant. On peut donc réduire sa taille (et donc son poids), de même que le courant qui y est injecté pour déplacer le pilote.

La vanne fluidique de l'invention permet un contrôle précis de grands débits de fluides car c'est la différence de pression entre la première et la deuxième cavités, imposée par la position relative du pilote par rapport au membre de vanne qui entraine le contrôle de débits de fluides. Ainsi le déplacement du membre de vanne est assuré par la différence de pression entre la première et la deuxième cavité ; le déplacement du pilote permettant le contrôle de cette différence de pression. Le contrôle de cette différence de pression par le déplacement du pilote relativement au membre de vanne nécessite donc de générer une force de déplacement faible (comparativement à la force générée sur le membre de vanne par la différence de pression). De la sorte, il est possible d'avoir une bonne précision de contrôle d'importants débits de fluides avec un petit actionneur électrique solénoïde alimenté par un courant électrique limité.

Le membre de vanne est percé d'un trou longitudinal permettant de mettre en communication lesdites première et deuxième cavités lorsque la restriction variable définie par la communication entre la cavité longitudinale et ladite première cavité n'est pas obturée. La ou les ouvertures perpendiculaires à la direction principale permettent, lorsqu'elles ne sont pas obturées par le pilote mobile, d'établir une communication entre la cavité longitudinale et la première cavité. L'invention permet d'avoir un mouvement du membre de vanne mobile qui est indépendant d'une variation de la pression de référence. De préférence, la pression dans la première cavité est une haute pression et la pression dans la deuxième cavité est une basse pression.

La première cavité, respectivement la deuxième cavité sont adjacente ou en contact à ladite première extrémité, respectivement à la deuxième extrémité du membre de vanne. En contact signifie qu'un fluide présent dans la première cavité, respectivement la deuxième cavité est en contact de ladite première extrémité, respectivement de la deuxième extrémité du membre de vanne. Ainsi un fluide à une pression donnée au contact de la première ou deuxième extrémité peut appliquer sa pression sur la première ou deuxième extrémité.

La vanne de l'invention, lors de son fonctionnement voit un écoulement de fluide entre la première cavité et la deuxième cavité, par l'intermédiaire de la cavité longitudinale percée dans le membre de vanne. De préférence, la première cavité est soumise à une pression plus élevée que la deuxième cavité. Du fait de la restriction variable contrôlée par le mouvement relatif du pilote mobile par rapport au membre de vanne mobile, l'écoulement entre la première et la deuxième cavité peut être ajusté. Une modification de l'écoulement entre ces deux cavités permet de moduler la pression dans ces deux cavités et ainsi de créer des forces de déplacement sur le membre de vanne mobile. Grâce à la position du pilote mobile par rapport aux ouvertures perpendiculaires permettant l'écoulement de fluide entre la première cavité et la cavité longitudinale, l'invention permet d'avoir un pilote mobile qui n'est pas ou presque pas influencé par les différences de pressions entre la première cavité et la deuxième cavité. En effet comme le pilote est complètement immergé dans le fluide de la première cavité, il est toujours soumis à la pression de la première cavité, de sorte qu'une modification de la pression dans la première et/ou dans la deuxième cavité n'exerce pas ou peu de force sur le pilote de l'invention. Le pilote de l'invention est alors équilibré car il est soumis à des forces liées à la pression qui sont homogènes sur toute ses faces. La pression de la deuxième cavité peut se faire ressentir par les ouvertures perpendiculaires dans la première cavité mais vu la géométrie, les forces créées au niveau de ces ouvertures, du fait qu'elles soient essentiellement perpendiculaires à la direction principale, n'entrent pas ou quasiment pas en interaction avec le pilote. L'on peut également dire que le pilote mobile de l'invention est stabilisé. Ainsi, la position du pilote mobile de l'invention est indépendante de la pression de la première cavité comme de la pression de la deuxième cavité.

Une restriction fixe dans ladite communication permet qu'un déplacement dudit pilote mobile induise une variation de pression dans une desdites première et deuxième cavités pour créer une force de déplacement sur ledit membre de vanne pour faire varier un débit de fluide entre l'entrée et les deux sorties.

L'ouverture latérale dans ledit membre de vanne est essentiellement perpendiculaire à ladite direction principale, c'est-à-dire qu'un axe passant essentiellement par le centre d'une ouverture latérale est perpendiculaire à ladite direction principale.

La cavité longitudinale étant non débouchante dans ladite première cavité au niveau de sa première extrémité, signifie qu' il y a une paroi au niveau de la première extrémité pour boucher la cavité longitudinale. La paroi bouchant la cavité longitudinale empêche un écoulement au niveau de la première extrémité. Ainsi, la cavité longitudinale est fermée du côté externe de la première extrémité et la cavité longitudinale est non débouchante dans la première cavité selon une direction parallèle à la direction principale que peut décrire le membre de vanne.

La vanne fluidique est configurée de sorte qu'un déplacement relatif entre le pilote mobile et le membre de vanne est apte à modifier une communication entre la cavité longitudinale et la première cavité par l'intermédiaire de l'au moins une ouverture latérale. Le mouvement relatif du pilote par rapport à au moins une ouverture latérale constitue une restriction variable. De préférence, modifier une communication entre la cavité longitudinale et la première cavité signifie la modification d'un degré de communication entre ces deux éléments.

Préférentiellement, ladite au moins une bobine et ledit pilote mobile de l'actionneur électrique solénoïde entoure ladite au moins une portion du membre de vanne comprenant un matériau ferromagnétique, pour une ou plusieurs positions dudit membre de vanne en fonctionnement normal de la vanne.

L'effet technique de l'actionneur électrique solénoïde entourant l'au moins une portion du membre de vanne comprenant un matériau ferromagnétique est de permettre d'imposer une position relative précise entre le membre de vanne et le pilote. C'est la position relative entre la portion ferromagnétique du membre de vanne et le pilote mobile ferromagnétique qui permet un contrôle de la communication entre la cavité longitudinale et la première cavité par l'intermédiaire de l'au moins une ouverture latérale en fonctionnement normal de la vanne.

Contrairement aux documents de l'état de la technique, ce mode de réalisation permet de contrôler avec précision la communication entre ladite cavité longitudinale et ladite première cavité pour une grande amplitude de déplacement du membre de vanne, en fonctionnement normal de la vanne. La position du pilote (et donc du membre de vanne) résulte donc essentiellement de l'effort magnétique de l'actionneur sur le pilote. Ainsi, le circuit magnétique « voit » principalement la position relative du pilote par rapport au membre de vanne et ne « voit » pas la position dans l'espace du membre de vanne et/ou du pilote en fonctionnement normal de la vanne.

Un avantage de ce mode de réalisation est que la portion du membre de vanne en matériau magnétique (de préférence ferromagnétique) n'a pas pour but de rendre l'actionneur capable d'exercer une force de déplacement directe sur celui-ci mais simplement de rendre le circuit magnétique « mobile » avec le membre de vanne (comme si l'actionneur était « embarqué » sur le membre de vanne) afin de réduire la course « magnétique » nécessaire à l'actionneur. Une telle réduction de course nécessaire à l'actionneur pour atteindre une ou plusieurs positions du membre de vanne (grâce au déplacement relatif du pilote par rapport à celui-ci) se traduit par un gain de taille, de poids, et de consommation électrique de l'actionneur solénoïde.

Finalement, la vanne fluidique selon l'invention présente les propriétés et avantages suivants :
- permet d'avoir un membre de vanne décrivant une grande course tout en limitant le déplacement relatif du pilote par rapport au membre de vanne, cela permet le contrôle de la position relative du pilote par rapport au membre de vanne sur une grande course mais avec un actionneur électrique solénoïde relativement petit, le poids de la vanne fluidique et le courant requis dans l'actionneur électrique s'en trouvant ainsi réduit.
- l'invention peut être vue comme une vanne permettant la génération d'une force magnétique combinée à l'action d'un ressort pour positionner un pilote (pouvant contrôler une restriction variable). La force magnétique s'applique entre 2 pièces mobiles, le pilote et une partie du tiroir (d'où l'appellation de bi-pilotes ou bi-plongeurs).

- la force magnétique résulte d'un mouvement relatifs du pilote et du membre de vanne (rapprochement ou écartement relatif), par exemple dû à une réduction de la réluctance, ce mouvement relatif entraine une variation de restriction (restriction variable) et donc une variation des pressions de part et d'autre du membre de vanne. Ceci entraine un déséquilibre de force sur le membre de vanne qui se déplace jusqu'à ce que l'équilibre de force soit rétabli (lorsque les pressions sont à nouveau équilibrées), c'est-à-dire lorsque la restriction variable est revenue quasiment à sa dimension initiale, c'est-à-dire lorsque la position relative entre le membre de vanne et le plongeur est revenue à sa valeur initiale. En réalité, il y a lieu de considérer que le retour à la dimension initiale est une approximation et qu'il y aurait lieu de tenir compte de la position du moyen de rétroaction (ressort ou hydraulique) et des différences de forces d'écoulement s'appliquant sur le membre de vanne (dues à son nouveau positionnement), souvent les différences de forces (rétroaction, force d'écoulement) peuvent être négligées. Le mode de réalisation incluant la rétroaction hydraulique est donc à privilégier pour un plus grand équilibre et une meilleure stabilité de la vanne fluidique de l'invention.
- la vanne utilise le principe de contre-réaction : l'actionneur solénoïde force une modification d'une caractéristique du système (restriction variable), provoquant un déséquilibre, auquel le système réagit de manière à rétablir la caractéristique à sa valeur permettant l'équilibre du système. De cette manière, le membre de vanne suit précisément la position du pilote et il n'est alors nécessaire que de positionner le pilote (avec un besoin de force réduit). Ainsi la position relative du pilote par rapport au membre de vanne est toujours la même du fait que ces deux pièces soit mobiles.
- la position du pilote (et donc du membre de vanne) résulte de la combinaison de l'effort magnétique de l'actionneur et de l'effort du ressort du pilote. Ainsi, le circuit magnétique « voit » uniquement la position relative du pilote par rapport au membre de vanne et ne « voit » pas la position dans l'espace du membre de vanne et ou du pilote.
- le fait qu'une partie du membre de vanne soit en matériau magnétique (de préférence ferromagnétique) n'a pas pour but de rendre l'actionneur capable d'exercer une force directe sur le membre de vanne, mais simplement de rendre le circuit magnétique « mobile » avec le membre de vanne (un peu comme si l'actionneur était « embarqué » sur le membre de vanne) afin de réduire la course « magnétique ».
- la vanne fluidique de l'invention permet un asservissement en position d'un membre de vanne afin de permettre un contrôle proportionnel entre au moins trois voies.
- l'invention permet une course réduite au niveau de l'actionneur (même si la course totale du pilote et du membre de vanne reste élevée, l'actionneur ne « voit » que la course relative.

L'avantage de la vanne équilibrée bi-pilotes de l'invention par rapport à une vanne mono-pilote est notamment de permettre une grande course du membre de vanne pour un faible déplacement du pilote tout en ayant une vanne équilibrée. Ainsi dans le cas d'une vanne mono-pilote , la force magnétique s'exerce entre le pilote et une pièce magnétique fixe (solénoïde), ce qui implique que le pilote doit effectuer la course complète du membre de vanne, la course « magnétique » du pilote par rapport au solénoïde est donc longue. Dans le cas bi-pilotes de l'invention, la force magnétique s'exerce entre deux pièces mobiles, c'est-à-dire à la fois le pilote et le membre de vanne. Le solénoïde ne doit donc être capable que d'effectuer la course relative entre les deux pièces (plus courte), alors que l'ensemble (membre de vanne + pilote) peut effectuer une course plus longue sans impacter le solénoïde ce qui peut donc permettre l'utilisation d'un solénoïde plus petit, et moins lourd. L'invention permet de réaliser un grand déplacement du membre de vanne avec un solénoïde relativement petit. Par exemple, le solénoïde devrait être dimensionné de tel sorte qu'il puisse permettre le déplacement selon la course relative au pilote et au membre de vanne.

La force magnétique créée par l'exposition du pilote mobile et du membre de vanne mobile au champ magnétique généré par le solénoïde attire ou repousse le pilote mobile et/ou le membre de vanne mobile l'un par rapport à l'autre, générant ainsi un mouvement relatif de ces deux éléments mobiles selon la direction principale. L'utilisation d'une forme biseauté du pilote permet une bonne linéarité de déplacement du pilote par rapport au membre de vanne. En effet, l'exposition au champ magnétique du pilote et du membre de vanne tend à faire évoluer le système vers une diminution de sa réluctance.

De préférence lorsque le pilote mobile et le membre de vanne mobile sont soumis au champ magnétique du solénoïde, la force de déplacement relative permet notamment un déplacement du pilote mobile relativement au membre de vanne car le pilote mobile a une inertie moindre que celle du membre de vanne et est soumis à moins de forces. En effet le membre de vanne est par exemple relié à un moyen de rétroaction reliant la deuxième extrémité du membre de vanne à une paroi de la deuxième cavité. Le membre de vanne est également soumis aux forces d'écoulement entre l'entrée et les deux sorties ainsi qu'aux forces d'écoulement dans la cavité longitudinale le traversant. Du fait que le pilote mobile soit équilibré, cela lui permet lorsqu'il est soumis au champ magnétique du solénoïde, de toujours réagir de la même manière à ce champ magnétique, par exemple quelle que soit : la pression dans la première cavité, la pression dans la deuxième cavité ou encore la différence de pression entre les première et deuxième cavités.

De façon préférée, la vanne fluidique de l'invention est configurée de sorte qu'une force de pression apte à s'exercer sur le pilote mobile selon une direction parallèle à la direction principale résulte uniquement d'une pression au sein de la première cavité. Cela présente l'avantage d'avoir un pilote stabilisé ne pouvant pas subir d'influence relative à la pression dans la deuxième cavité, ou en tout cas de façon négligeable.

Une portion du membre de vanne comprend un matériau ferromagnétique et l'actionneur électrique solénoïde est apte à exercer une force magnétique de déplacement sur ladite portion ferromagnétique du membre de vanne. Dans ce cas-là, l'actionneur électrique solénoïde peut être qualifié d'actionneur à deux pilotes ou deux plongeurs. Quand un courant électrique circule dans le solénoïde, le pilote et le membre de vanne se rapprochent pour diminuer la réluctance et donc l'énergie magnétique. Mais suite à ce déplacement apparaît des différences de pression entre les première et deuxième cavités qui permettent de déplacer le membre de vanne dans un sens opposé en général, permettant in fine d'avoir un déplacement du membre de vanne important.

De préférence, la vanne fluidique de l'invention comprend un ressort tel que la deuxième extrémité du membre de vanne est reliée au corps de vanne par l'intermédiaire dudit ressort.

Un autre avantage de l'invention est que le pilote est équilibré par rapport à la pression de la première cavité, ainsi celui-ci n'est pas influencé par la pression dans cette cavité. Du fait de l'équilibrage du pilote dans la première cavité, une variation de pression induite par une modification de la restriction variable définie par la communication entre la cavité longitudinale et ladite première cavité, n'a pas ou que très peu d'influence sur la position du pilote. Ainsi la vanne fluidique de l'invention est définie comme une vanne équilibrée qui permet une variation de la position du membre de vanne engendrée par une variation de la position du pilote, sans pour autant que le pilote ne subisse la variation de pression entre la première et la deuxième cavité. L'avantage d'une vanne équilibrée est qu'elle permet un très bon contrôle de la position du membre de vanne avec des temps de réponse relativement court et ne nécessitant pas de période transitoire de stabilisation.

Avec la vanne fluidique de l'invention, il est possible d'avoir de grands déplacements (ou de grandes courses) du membre de vanne, même si le pilote décrit un petit déplacement. De préférence le déplacement du pilote par rapport au membre de vanne devrait être considéré comme un déplacement relatif. En effet, un déplacement du pilote entraine un déplacement du membre de vanne ainsi que son propre déplacement. Ainsi un grand déplacement du membre de vanne et du pilote peut être obtenu pour un très faible déplacement engendré par l'actionneur solénoïde. La vanne fluidique selon l'invention peut donc être vue comme une vanne d'amplification. Généralement, à partir de 4 mm de course du membre de vanne, un homme du métier parle de grande course. La masse de la vanne de l'invention peut être inférieure à 2 kg. De préférence, elle peut descendre à 1.5 kg, voire à 1 kg.

Avec la vanne fluidique de l'invention, un déplacement du membre de vanne n'est pas nécessairement identique au déplacement du pilote qui induit le déplacement du membre de vanne, en particulier au moment de l'actuation du pilote. Pour la vanne fluidique de l'invention, le pilote et le membre de vanne ne sont pas connectés mécaniquement. Par exemple, le pilote et le membre de vanne ne sont pas en contact mais permettent la modulation de la restriction variable en bouchant plus ou moins d'ouvertures latérales du membre de vanne par le déplacement du pilote.

Selon un mode de réalisation préféré, la vanne fluidique comprend en outre :
- une troisième cavité ayant une communication pour la connecter de manière fluidique à une troisième pression, et
- un piston mécaniquement couplé au membre de vanne et ayant une première partie et une deuxième partie, la première partie étant dans la deuxième cavité, et la deuxième partie étant située au moins partiellement dans la troisième cavité, de sorte qu'un déplacement dudit pilote mobile induise une variation de pression dans la première cavité pour créer une force de déplacement sur ledit membre de vanne pour faire varier un débit de fluide entre l'entrée et les deux sorties.

Un avantage de ce mode de réalisation préféré est de fournir une vanne fluidique telle que la force de rappel s'exerçant sur son membre de vanne est indépendante de la position du membre de vanne.

Dans la vanne fluidique selon l'invention, la pression régnant dans le trou longitudinal est égale à la pression régnant dans la deuxième cavité. Un déplacement du pilote agrandit ou rétrécit la communication fluidique entre le trou longitudinal et la première cavité. Par conséquent, ce déplacement modifie la pression régnant dans la première cavité. En d'autres termes, un déplacement du pilote modifie la différence de pression entre les première et deuxième cavités. Cette différence de pression donne naissance à une force de déplacement sur le membre de vanne. Si cette force est suffisante par rapport à la force de rappel s'exerçant sur le membre de vanne, elle permet de déplacer le membre de vanne.

Dans la vanne fluidique selon l'invention, la pression régnant dans la deuxième cavité crée une force sur le membre de vanne et sur la première partie du piston, et la pression régnant dans la troisième cavité crée une force sur la deuxième partie du piston. La force de rappel sur le membre de vanne est due à la résultante de ces deux forces. Comme la deuxième cavité est connectée à une deuxième pression et la troisième cavité est connectée à une troisième pression, les pressions régnant dans les deuxième et troisième cavités sont indépendantes de la position du membre de vanne. Par conséquent, la résultante des forces est indépendante de la position du membre de vanne.

La vanne fluidique selon l'invention peut être dite "à rétroaction hydraulique".

Les communications permettent de relier de manière fluidique les cavités à des cavités externes comprenant des fluides à une pression donnée ou pression de référence. Chaque communication peut relier une cavité à une même pression externe ou à des pressions externes différentes.

La première, la deuxième et la troisième pressions sont préférentiellement des pressions externes. La première, la deuxième et la troisième communications sont préférentiellement situées au moins partiellement dans le corps de vanne. La troisième pression est préférentiellement différente de la deuxième pression. La troisième pression est préférentiellement supérieure à la deuxième pression. La troisième pression est préférentiellement égale à la première pression. Préférentiellement, la deuxième communication ne comprend pas de restriction fixe. La pression régnant dans la deuxième cavité est préférentiellement égale à la deuxième pression. Préférentiellement, la troisième communication ne comprend pas de restriction fixe. La pression régnant dans la troisième cavité est préférentiellement égale à la troisième pression.

La première partie du piston est préférentiellement fixée au membre de vanne.

L'actionneur de la vanne fluidique de l'invention peut être qualifié d'immergé. Ainsi, si la vanne fluidique de l'invention permet de contrôler un débit d'huile, l'actionneur est immergé dans de l'huile quand la vanne fluidique est en fonctionnement.

De préférence, la troisième cavité est située dans le creux du corps de vanne.

De préférence, la première communication débouche dans la première cavité.

De préférence, la vanne fluidique comprend un ressort reliant ledit pilote à la bobine dudit actionneur solénoïde de sorte que ladite force dudit ressort est apte à modifier au moins partiellement ladite communication entre ladite cavité longitudinale et ladite première cavité par l'intermédiaire de ladite au moins une ouverture latérale.

De préférence, un déplacement du pilote mobile selon une direction de ladite direction principale est apte à modifier ladite communication entre ladite cavité longitudinale et ladite première cavité par l'intermédiaire de ladite au moins une ouverture latérale entrainant des variations de pression dans lesdites première et deuxième cavités telles que cela engendre un déplacement dudit membre de vanne selon ladite direction.

Par exemple, un déplacement du pilote vers la gauche engendre un déplacement du membre de vanne vers la gauche. Par exemple, un déplacement du pilote vers la droite, engendre un déplacement du membre de vanne vers la droite.

De préférence, une portion dudit pilote mobile située entre ledit membre de vanne et ladite au moins une bobine définit essentiellement une forme biseauté, de sorte qu'elle est apte à modifier ladite communication entre ladite cavité longitudinale et ladite première cavité par l'intermédiaire de ladite au moins une ouverture latérale.

L'avantage d'une telle forme biseauté ou d'une telle troncature de la partie du pilote permettant de modifier la restriction variable entre le pilote mobile et le membre de vanne mobile est d'avoir une meilleure linéarité de la force de déplacement appliquée par la bobine en fonction du courant envoyé à la bobine et donc d'avoir, *in fine,* un meilleur contrôle du déplacement du pilote mobile relativement au membre de vanne. Un autre avantage d'avoir une telle forme biseautée au niveau des ouvertures perpendiculaire du membre de vanne, est que le pilote est moins disposé à subir une force ayant pour origine une modification d'une pression dans la première ou la deuxième autre cavité.

Préférentiellement :
- ledit corps de vanne comprend deux communications, chacune d'entre elles étant apte à connecter de manière fluidique le creux du corps de vanne avec une pression externe, et en ce que
- ladite vanne fluidique comprend une restriction fixe dans chaque communication de sorte qu'un déplacement dudit pilote mobile induise une variation de pression dans chacune desdites première et deuxième cavités pour créer une force de déplacement sur ledit membre de vanne pour faire varier un débit de fluide entre l'entrée et les deux sorties.

L'importance de la restriction fixe peut être décrite comme suit : le déplacement du membre de vanne étant engendré par une différence de pression entre la première et la deuxième cavité nécessite que la pression dans la première cavité puisse être modifiée. Lors du fonctionnement de la vanne fluidique proportionnelle de l'invention, il existe un écoulement de fluide entre les communications de référence au travers de la première cavité, permettant le contrôle de la pression dans la première cavité au moyen de l'actionnement du pilote (le déplacement du pilote pouvant être assimilé à une restriction variable). Ce contrôle de pression est uniquement possible du fait de la présence de la restriction fixe dans la communication car la restriction fixe permet à la pression dans la première cavité de ne pas toujours être égale à la pression HP ou MP imposée en entrée de la communication. En effet, une première cavité reliée à une pression extérieure par une communication sans restriction fixe serait toujours à la pression extérieure et ne pourrait dès lors subir aucune variation contrôlée pour une pression extérieure constante. Lors de l'actionnement du pilote, la restriction fixe permet donc d'engendrer une variation de la pression dans la première cavité provoquant alors un déplacement du membre de vanne.

Pour tous les modes de réalisation de l'invention et en particulier concernant les restrictions fixes, il s'agit de considérer une approche dynamique de la vanne fluidique proportionnelle de l'invention, c'est-à-dire avec une écoulement de fluide ininterrompu (entre l'entrée et les sorties et entre les communications de référence) plutôt qu'une approche statique afin de bien saisir l'aspect essentiel de la restriction fixe ainsi que de la restriction variable pour créer une force de déplacement sur le membre de vanne.

De préférence, la vanne fluidique comprend un ressort et une extrémité dudit membre de vanne est reliée audit corps de vanne par l'intermédiaire dudit ressort.

Un mode de réalisation alternatif prévoit que la vanne fluidique soit configurée de sorte qu'un déplacement dudit pilote mobile induise une variation de pression pour créer une force sur ledit pilote de sens opposé audit déplacement.

L'actionneur électrique de type solénoïde de la vanne fluidique selon l'invention ne nécessite pas un grand courant d'alimentation, même si l'on désire que le membre de vanne décrive de grandes courses. Par exemple, on peut utiliser un courant de 0 à 100 mA sur un bus 16-29 VDC, de préférence de type EEC-FADEC. Une faible puissance électrique peut donc suffire pour déplacer le membre de vanne selon une longue course. La vanne fluidique de l'invention n'est pas du type 'Direct Drive'. Les termes 'entrée' et 'sorties' du corps de vanne creux pourraient être inter changés. Cela n'est en effet fonction que du sens d'écoulement du fluide dont le débit est contrôlé par la vanne de l'invention. Ainsi, le corps de vanne pourrait contenir deux entrées et une sortie. De même, le corps de vanne pourrait comprendre plus qu'une entrée et plus que deux sorties. Il est possible d'inverser les entrées en sorties et vice-versa.

On entend par force de déplacement une force qui a un sens et une direction selon une direction de déplacement possible du membre de vanne mobile. Le pilote est parfois appelé plongeur par un homme du métier. Les communications sont aptes à mettre en communication le creux du corps de vanne creux et en particulier les première et deuxième cavités avec une ou plusieurs pressions de référence. Le terme 'restriction fixe' est connu d'un homme du métier. Différents types de restriction fixe peuvent être envisagés. Un exemple non limitatif est un orifice circulaire percé dans une paroi dont l'épaisseur est du même ordre de grandeur que son diamètre. D'autres exemples sont un coude, un rétrécissement de diamètre.

La vanne fluidique de l'invention présente d'autres avantages. Elle peut être moins chère que d'autres solutions existantes présentant un tel déplacement du membre de vanne. Elle présente aussi de bonnes performances. Généralement, les vannes amplifiées hydrauliquement existantes (type servovalves) ne peuvent pas s'appliquer à de grandes courses. Si l'on fait passer un gros débit à travers une servovalve existante, ses performances seront affectées (perte de résolution, pertes de charge augmentées). Avec la vanne stabilisée de l'invention, on peut obtenir une amplification tout en ayant de bonnes performances (résolution, précision, répétabilité). Ainsi, avec la vanne stabilisée de l'invention, il est possible d'avoir les caractéristiques suivantes : précision en boucle ouverte de 10% sur la position du membre de vanne, résolution de 5 % sur la position du membre de vanne, répétabilité de 2 % sur la position du membre de vanne. La vanne selon l'invention est en outre particulièrement simple et ne nécessite pas d'éléments de forme compliquée. Le principe d'amplification du mouvement du membre de vanne peut s'appliquer sur des déplacement relativement important. L'interface de l'actionneur peut être une commande de type signal ordinateur (EEC-FADEC par exemple). La vanne fluidique selon l'invention peut être utilisée dans de nombreuses applications : dans un moteur d'un aéronef par exemple mais pas seulement.

La vanne fluidique de l'invention est une vanne proportionnelle, terme connu de l'homme du métier. En conséquence, on arrive à contrôler le passage entre l'entrée et chacune des deux sorties sur toute la plage de course du membre de vanne. La vanne de l'invention n'est donc pas simplement une vanne ON-OFF, contrairement à la vanne décrite dans US4,445,528 (pour cette dernière, il y a une chute de pression dans une cavité plutôt qu'une variation progressive de pression). Avec la vanne de l'invention, il y a une infinité de positions stables pour le membre de vanne : elle permet donc un réel contrôle du débit de fluide entre l'entrée et les deux sorties, contrairement à US4,445,528 (cela est possible par un réel contrôle de la pression dans la première et/ou deuxième cavité). L'actionneur électrique de la vanne fluidique de l'invention peut être qualifié d'immergé, contrairement à la vanne de US2,526,709. Ainsi, si la vanne fluidique de l'invention permet de contrôler un débit d'huile, l'actionneur électrique est immergé dans de l'huile quand la vanne fluidique est en fonctionnement.

Selon une variante possible, le corps de vanne comprend deux communications, chacune d'entre elles étant apte à connecter de manière fluidique le creux du corps de vanne avec une ou deux pressions externes, et la vanne fluidique comprend une ou deux restrictions fixes dans (ou au niveau de) une ou les deux communications de sorte qu'un déplacement dudit pilote mobile induise une variation de pression dans chacune desdites première et deuxième cavités pour créer une force de déplacement sur ledit membre de vanne pour faire varier une débit de fluide entre l'entrée et les deux sorties. Comme communication permet donc de relier de manière fluidique le creux du corps de vanne à une cavité externe comprenant un fluide qui a une pression donnée. Chaque communication peut relier le creux à une même pression externe ou à deux pressions externes différentes. Avec ce mode de réalisation préféré, le contrôle du mouvement du membre de vanne est encore meilleur et l'amplification de la force agissant dessus peut être plus grande.

De préférence, la vanne fluidique de l'invention est configurée de sorte qu'un déplacement dudit pilote mobile induise une variation de pression pour créer une force sur ledit pilote de sens opposé audit déplacement. Cela permet d'avoir une vanne fluidique plus stable car il s'exerce sur le pilote une force de sens opposé à son déplacement.

La communication vers une pression de référence débouchant sur la première cavité permet d'avoir une pression constante au niveau dudit pilote mobile quelle que soit sa position. Cela correspond à une version équilibrée de la vanne fluidique. De préférence, la deuxième cavité est reliée à une pression avale. La restriction fixe peut comprendre un passage (ou communication ou jeu d'usinage) entre le pilote et une paroi cylindrique l'entourant. Une telle paroi cylindrique est une paroi interne du corps de vanne là où est situé l'actionneur électrique solénoïde.

Le pilote peut être connecté à un ressort.

Selon un mode de réalisation possible, ledit membre de vanne est percé d'un trou longitudinal qui permet de mettre en communication lesdites première et deuxième cavités lorsqu'il n'est pas obturé. Alors, ledit pilote est de préférence configuré de sorte qu'il est apte à modifier un degré de communication entre la cavité longitudinale du membre de vanne et la première cavité. Dans ce cas, ledit pilote est de préférence situé dans ladite première cavité et ladite communication est apte à permettre une communication entre ladite première cavité et ladite pression externe (ou pression de référence) qui est alors de préférence une haute pression. De préférence, la deuxième cavité est alors en communication avec une basse pression.

De préférence, ladite communication vers ladite pression externe comprend un filtre. Cela permet de répondre à un besoin de fluide propre.

De préférence, le pilote a une symétrie de révolution.

La vanne fluidique selon l'invention permet de répartir un débit de fluidique entre deux voies (par exemple deux sorties) de manière proportionnelle, c'est-à-dire 50%-50%, grâce à un signal de commande de faible puissance qui peut être envoyé par un ordinateur. La vanne fluidique de l'invention peut être utilisée avec différents fluides comme par exemple : de l'huile, de l'huile moteur, du carburant. La vanne fluidique de l'invention pourrait être utilisée avec d'autres fluides. De préférence, la vanne fluidique de l'invention comprend un ou plusieurs filtres ou dispositifs anti-pollution (joints, chemins de fuite par exemple) pour diminuer les risques de blocage du membre de vanne. La vanne fluidique de l'invention peut être utilisée dans un circuit hydraulique d'un équipement d'un aéronef comme par exemple : circuit hydraulique d'un train d'atterrissage.

Les inventeurs proposent également un circuit hydraulique pour un équipement d'un aéronef (par exemple circuit hydraulique d'un train d'atterrissage), un système de pile à combustible, une turbomachine et un aéronef comprenant une ou plusieurs vannes fluidiques selon l'invention.

### Brève description des figures

Ces aspects ainsi que d'autres seront clarifiés dans la description détaillée de modes de réalisation particuliers de l'invention, référence étant faite aux dessins des figures, dans lesquelles:
- la Fig.1 montre un mode de réalisation possible de la vanne fluidique de l'invention;
- la Fig.2 montre un autre mode de réalisation de ladite vanne fluidique;

Les dessins des figures ne sont pas à l'échelle. Généralement, des éléments semblables sont dénotés par des références semblables dans les figures. La présence de numéros de référence aux dessins ne peut être considérée comme limitative, y compris lorsque ces numéros sont indiqués dans les revendications.

### Description détaillée de certains modes de réalisation de l'invention

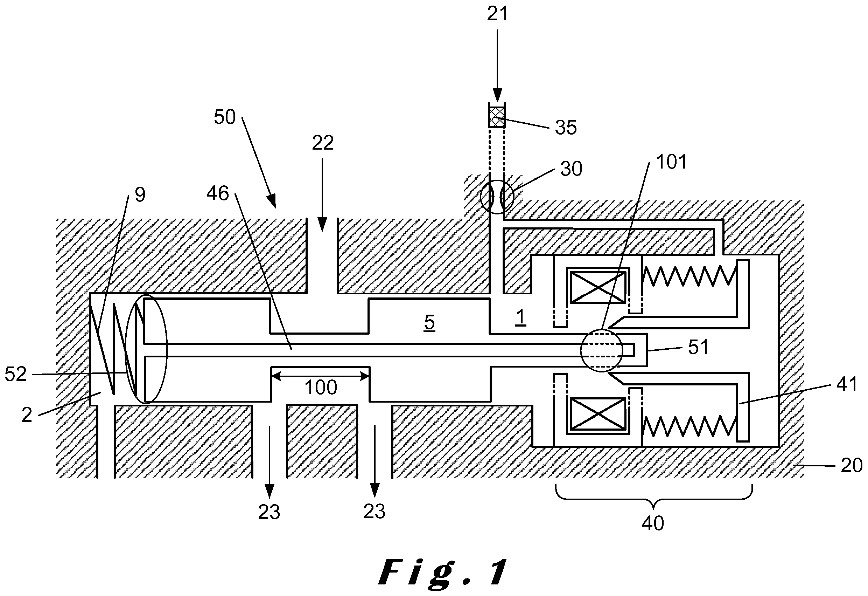

La figure 1 montre un exemple de mode de réalisation de la vanne fluidique 50 selon l'invention. Elle comprend un corps de vanne 20 creux et trois voies : une entrée 22 et deux sorties 23. De préférence, la sortie 23 de gauche est une sortie de by-pass, terme connu d'un homme du métier. De préférence, la sortie 23 de droite est une sortie moteur. Le membre de vanne 5 ou tiroir est mobile dans le corps de vanne 20 creux. La forme du membre de vanne 5 par rapport au creux du corps de vanne 20 creux est telle qu'une variation de la position du membre de vanne 5 permet de varier un débit de fluide entre l'entrée 22 et une ou les deux sorties 23. Comme cela est montré à la figure 1, une extrémité du membre de vanne 5 est de préférence connectée ou reliée au corps de vanne 20 par l'intermédiaire d'un ressort 9. Le membre de vanne 5 définit une première cavité 1 à sa droite et une deuxième cavité 2 à sa gauche, au niveau du ressort 9. La deuxième cavité 2 est de préférence mise à la pression avale comme montré à la figure 1. La pression de la première cavité 1 est réglée via une communication 21 vers une pression de référence (ou pression externe) qui est ici une haute pression et via une restriction variable contrôlée par la position du pilote 41 relativement à la position du membre de vanne 5. La communication 21 vers la pression externe comprend une restriction 30. La communication 21 présente deux points de communication avec la première cavité 1 afin de garantir une bonne répartition de la pression dans la première cavité 1.

La vanne fluidique 50 comprend aussi un actionneur électrique solénoïde 40 comprenant une bobine et un pilote 41 mobile ferromagnétique. En injectant un courant électrique dans la bobine de l'actionneur électrique 40, le pilote 41 ferromagnétique se déplace en général pour diminuer la réluctance (terme connu d'un homme du métier) ou de manière équivalente l'énergie magnétique globale. Un ressort reliant le pilote 41 à la bobine de l'actionneur solénoïde 40 est par exemple un ressort en compression, qui permet au pilote 41 de reprendre une position initiale lorsqu'aucun courant n'est pas appliqué à la bobine de l'actionneur solénoïde. Ainsi la vanne fluidique de l'invention permet un bon contrôle de la position du pilote 41.

Pour l'exemple de la figure 1, lorsqu'un courant électrique s'écoule dans la bobine de l'actionneur solénoïde, le pilote 41 se déplace vers la gauche, diminuant la communication entre la première cavité 1 et la sortie la communication latérale 101 de la cavité longitudinale 46 du membre de vanne 5. La pression dans la première cavité 1 augmente alors car le pilote 41 empêche l'équilibrage de pression entre la première cavité 1 et la deuxième cavité 2 via l'orifice longitudinal 46. La pression de la deuxième cavité 2 étant une pression plus basse que la pression de la première cavité 1, il apparaît une différence de pression entre les première 1 et deuxième 2 cavités. Cette différence de pression s'applique sur les éléments mobiles tels le pilote 41 et le membre de vanne 5. Le pilote 41 étant ainsi complètement compris dans la première cavité 1, le pilote 41 ne ressent aucun effet d'une variation de pression dans la première cavité. Par contre la différence de pression ainsi créée s'applique sur le membre de vanne 5 et induit une force de déplacement vers la gauche sur le membre de vanne 5, si cette force de déplacement est suffisamment importante, le membre de vanne 5 se déplace vers la gauche. Si la haute pression ou pression externe via la communication 21 diminue, c'est-à-dire que la pression de la première cavité 1 diminue, la force exercée par l'actionneur solénoïde 40 reste constante car elle ne dépend que du courant circulant dans sa bobine. Cependant cela induira une modification du degré de communication entre les ouvertures latérales 101 et le pilote 41, c'est-à-dire de la restriction variable afin qu'un équilibre des forces sur le membre de vanne 5 soit rétabli.

La figure 1 montre une vanne équilibrée proportionnelle à bi-pilote et comprenant un système de rétroaction à ressort 9. Le ressort 9 est relié entre une paroi fixe du corps de vanne 20 et la deuxième extrémité 52 du membre de vanne 5. Le ressort 9 du système de rétroaction a pour but d'éliminer les vibration du membre de vanne 5 lorsqu'il cherche à atteindre une position d'équilibre, c'est-à-dire une équilibrage des forces qui agissent sur lui. Ainsi lorsque le membre de vanne 5 est en équilibre, c'est-à-dire que les forces s'appliquant sur sa première extrémité 51 et sur sa deuxième extrémité 52 s'annulent, le ressort 9 exerce une certaine force de la deuxième extrémité du membre de vanne 5. Lors d'un déplacement du pilote 41 vers la gauche, la pression dans la première cavité va avoir tendance à augmenter due à la fermeture de la restriction variable 101 ce qui a tendance à pousser le membre de vanne 5 vers ma gauche. Un déplacement du membre de vanne 5 vers la gauche entraine alors une réouverture de la restriction variable 101, permettant à la pression dans la première cavité 1 de diminuer jusqu'à ce que les forces s'appliquant sur le membre de vanne 5 s'équilibrent. Le ressort 9 permet ainsi de maintenir une force quasi-constante sur le membre de vanne 5 quelle que soit sa position afin d'éviter les oscillations du membre de vanne 5 lors de son déplacement.

Lors d'un déplacement du pilote 41 vers la droite, c'est-à-dire qu'un courant plus faible que celui qui était appliqué précédemment est appliqué à la bobine de l'actionneur solénoïde 40. Ainsi la communication entre la cavité longitudinale 46 et la première cavité 1 via les ouvertures latérales 101 est agrandie, ce qui engendre une baisse de pression dans la première cavité 1 et donc le membre de vanne 5 est soumis à une force de déplacement vers la droite, entrainant alors une réduction de la restriction variable permettant la communication entre les première 1 et deuxième 2 cavités jusqu'à ce que les forces s'appliquant sur le membre de vanne 5 se retrouvent à l'équilibre. Dans ce mode de réalisation, l'avantage de la configuration d'une telle restriction variable est que le plongeur (pilote) 41 ne subit jamais les différences de pression entre les deux cavités 1, 2 permettant d'avoir une vanne fluidique bien équilibrée, rapide et précise.

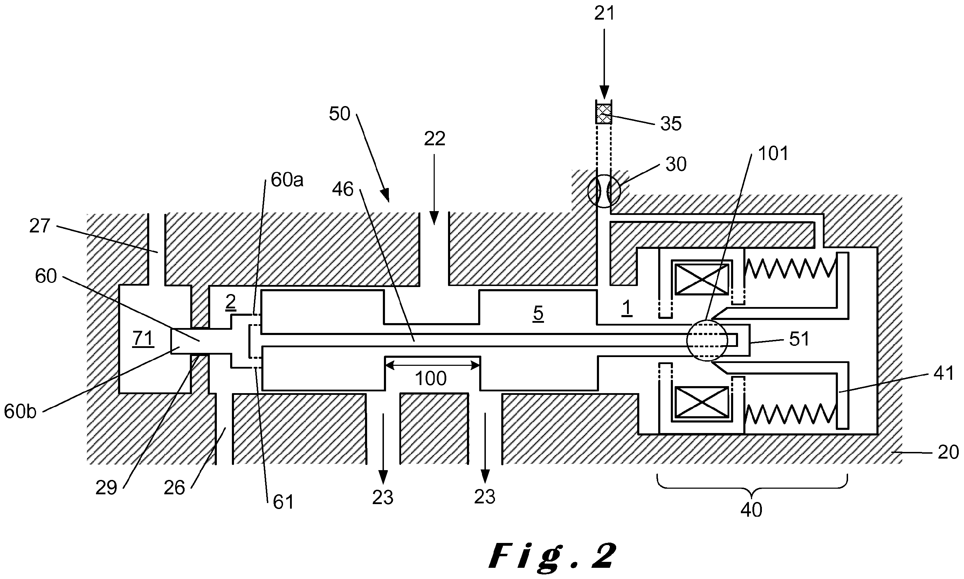

La figure 2 montre un autre mode de réalisation de l'invention et en particulier, un autre mode de réalisation de la rétroaction agissant sur la deuxième extrémité 52 du membre de vanne 5.

La vanne fluidique 50 comprend en outre une troisième cavité 71 connectée fluidiquement à une troisième pression, par exemple une pression HP externe, à l'aide d'une troisième communication 27. Préférentiellement, la troisième communication 27 permet que la troisième pression règne dans la troisième cavité 71. La troisième cavité 71 est préférentiellement située dans le creux du corps de vanne 20.

La vanne fluidique 50 comprend en outre un piston 60 ayant une première partie 60a et une deuxième partie 60b. La première partie 60a étant fixée au membre de vanne 5 dans la deuxième cavité 2. La deuxième partie 60b est située au moins partiellement dans la troisième cavité 71. Préférentiellement, la première partie 60a du piston 60 est plus large que la deuxième partie 60b du piston 60. Préférentiellement, le piston 60 coulisse dans une cinquième communication 29 entre la deuxième 2 et la troisième 71 cavités. Le piston 60 est préférentiellement immergé, par exemple dans un fluide visqueux de type huile.

Dans un mode de réalisation de l'invention, la première partie 60a du piston 60 est fixée au membre de vanne 50 sur sa deuxième extrémité 52 autour de la cavité longitudinale 46 et la première partie 60a est percée de canaux 61 mettant en communication fluidique la deuxième cavité 2 et la cavité longitudinal 46. Cela permet que les forces résultant des pressions sur le piston 60 soient alignées avec le déplacement gauche-droite du membre de vanne 5 selon la direction principale 100 et que la pression régnant dans la deuxième cavité 2 règne aussi dans la cavité longitudinale 46.

Selon un mode de réalisation, la vanne fluidique 50 peut fonctionner de la manière suivante :
Au niveau de la première cavité 1, lorsqu'un actionnement électrique déplace le pilote 41 vers la gauche l'ouverture latérale 101 de la cavité longitudinale 46, dans lequel règne la pression BP, est davantage obturée. La pression dans la première cavité 1 augmente alors, grâce à la première communication 21. Cette augmentation de pression augmente la force qui pousse le membre de vanne 5 vers la gauche.

Inversement, au niveau de la première cavité 1, lorsqu'un actionnement électrique déplace le pilote 41 vers la droite, l'ouverture latérale 101 de la cavité longitudinale 46, dans lequel règne la pression BP, est moins obturée. La pression dans la première cavité 1 diminue alors. Cette diminution de pression diminue la force qui pousse le membre de vanne 5 vers la gauche.

Au niveau de la deuxième cavité 2, la force poussant le membre de vanne 5 vers la droite provient (i) de la force due à la pression HP régnant dans la troisième cavité 71 et s'exerçant sur la deuxième partie 60b du piston 60, et (ii) de la force due à la pression BP régnant dans la deuxième cavité 2 et s'exerçant sur la première partie 60a du piston 60 et sur le membre de vanne 5.

La position du membre de vanne 5 est ainsi déterminée par l'équilibre entre les forces s'exerçant vers la gauche au niveau de la première cavité 1 et vers la droite au niveau de la deuxième cavité 2.

Il est particulièrement intéressant que la première communication 21 et la troisième communication 27 soient connectées à une même pression externe, car si cette dernière change, les pressions dans la première cavité 1 et la troisième cavité 71 changent dans le même sens. Ainsi, les forces vers la gauche et droite augmentent aussi dans le même sens et la position du membre de vanne 5 n'est que peu influencée par cette augmentation de pression externe.

En Figures 1 et 2, l'actionneur électrique solénoïde 40 est positionné dans le creux du corps vanne 20. La bobine de l'actionneur électrique solénoïde 40 est positionné autour d'une portion du pilote 41 et d'une portion ferromagnétique du membre de vanne 5. La bobine de l'actionneur électrique solénoïde 40 entoure une portion du pilote 41 et une portion ferromagnétique du membre de vanne 5. De préférence, l'actionneur électrique solénoïde 40 est positionné autour des communications latérales 101 de la cavité longitudinale 46 du membre de vanne 5, en fonctionnement normal de la vanne 50. Par exemple, les communications latérales 101 de la cavité longitudinale 46 du membre de vanne 5 sont situées dans la portion ferromagnétique du membre de vanne 5. Par exemple, la première extrémité 51 du membre de vanne 5 est comprise dans la portion ferromagnétique du membre de vanne 5. Lorsqu'un courant est injecté dans la bobine de l'actionneur électrique solénoïde 40, le circuit magnétique formé par la bobine de l'actionneur électrique solénoïde 40, le pilote 41 et le membre de vanne 5 engendre (lorsque le courant injecté est suffisant), une force de déplacement relative du pilote 41 par rapport au membre de vanne 5 ou inversement.

La présente invention a été décrite en relation avec des modes de réalisations spécifiques, qui ont une valeur purement illustrative et ne doivent pas être considérés comme limitatifs. D'une manière générale, la présente invention n'est pas limitée aux exemples illustrés et/ou décrits ci-dessus. L'usage des verbes « comprendre », « inclure », « comporter », ou toute autre variante, ainsi que leurs conjugaisons, ne peut en aucune façon exclure la présence d'éléments autres que ceux mentionnés. L'usage de l'article indéfini « un », « une », ou de l'article défini « le », « la » ou « l' », pour introduire un élément n'exclut pas la présence d'une pluralité de ces éléments. Les numéros de référence dans les revendications ne limitent pas leur portée.

## Revendications

1. Vanne fluidique (50) pour un circuit hydraulique d'un équipement d'un aéronef et comprenant :
- un corps de vanne (20) creux comprenant une entrée (22), deux sorties (23) et une communication (21) destinée à être reliée à une pression externe;
- une restriction fixe (30) dans ladite communication (21),
- un actionneur électrique solénoïde (40) situé dans le creux du corps de vanne (20) creux et comprenant au moins une bobine et un pilote (41) mobile ferromagnétique;
- un membre de vanne (5) mobile dans le corps de vanne (20) selon une direction principale (100) pour obturer au moins partiellement un passage entre ladite entrée (22) et une des deux sorties (23),
ledit membre de vanne (5) :
o comprenant une première (51) et une deuxième (52) extrémités,
o définissant au moins partiellement une première (1) et une deuxième (2) cavités situées de part et d'autre dudit membre de vanne (5) dans le creux du corps de vanne (20), ladite première (1), respectivement deuxième (2), cavité étant adjacente à ladite première (51), respectivement deuxième (52) extrémité, ladite première cavité (1) étant destiné à être reliée à ladite pression externe via ladite communication (21),
o ledit membre de vanne (5) comprenant une cavité longitudinale (46) s'étendant parallèlement à ladite direction principale (100) et débouchant dans ladite deuxième cavité (2),
- au moins une portion du membre de vanne (5) comprenant un matériau ferromagnétique,
- ledit membre de vanne (5) comprenant au moins une ouverture latérale (101) essentiellement perpendiculaire à ladite direction principale (100) pour mettre en communication ladite cavité longitudinale (46) avec ladite première cavité (1), ladite cavité longitudinale (46) étant non débouchante dans ladite première cavité (1) au niveau de sa première extrémité (51),
- la vanne fluidique (50) étant configurée de sorte qu'un déplacement relatif entre ledit pilote (41) mobile et ledit membre de vanne (5) est apte à modifier une communication entre ladite cavité longitudinale (46) et ladite première cavité (1) par l'intermédiaire de ladite au moins une ouverture latérale (101), l'actionneur électrique solénoïde (40) étant complètement compris dans la ladite première cavité (1), ladite au moins bobine et ledit pilote (41) mobile de l'actionneur électrique solénoïde (40) entourant au moins une portion du membre de vanne (5) pour une ou plusieurs positions dudit membre de vanne (5) en fonctionnement normal de la vanne (50).

2. Vanne fluidique (50) selon la revendication précédente **caractérisée en ce que** ladite au moins une bobine et ledit pilote (41) mobile de l'actionneur électrique solénoïde (40) entourent ladite au moins une portion du membre de vanne (5) comprenant un matériau ferromagnétique, pour une ou plusieurs positions dudit membre de vanne (5) en fonctionnement normal de la vanne (50).

3. Vanne fluidique (50) selon l'une quelconque des revendications précédentes **caractérisée en ce qu'**elle est configurée de sorte qu'une force de pression apte à s'exercer sur le pilote (41) mobile selon une direction parallèle à la direction principale (100) résulte uniquement d'une pression au sein de la première cavité (1).

4. Vanne fluidique (50) selon l'une quelconque des revendications précédentes **caractérisée en ce qu'**elle comprend en outre :
- une troisième cavité (71) ayant une communication (27) pour la connecter fluidiquement à une troisième pression, et
- un piston (60) mécaniquement couplé au membre de vanne (5) et ayant une première partie (60a) et une deuxième partie (60b), la première partie (60a) étant dans la deuxième cavité (2), et la deuxième partie (60b) étant située au moins partiellement dans la troisième cavité (71), de sorte qu'un déplacement dudit pilote (41) mobile induise une variation de pression dans la première cavité (1) pour créer une force de déplacement sur ledit membre de vanne (5) pour faire varier un débit de fluide entre l'entrée (22) et les deux sorties (23).

5. Vanne fluidique (50) selon l'une quelconque des revendications précédentes **caractérisée en ce qu'**un déplacement du pilote (41) mobile selon une direction de ladite direction principale (100) est apte à modifier ladite communication entre ladite cavité longitudinale (46) et ladite première cavité (1) par l'intermédiaire de ladite au moins une ouverture latérale (101) entrainant des variations de pression dans lesdites première (1) et deuxième (2) cavités telles que cela engendre un déplacement dudit membre de vanne (5) selon ladite direction.

6. Vanne fluidique (50) selon l'une quelconque des revendications précédentes **caractérisée en ce qu'**une portion dudit pilote mobile située entre ledit membre de vanne (5) et ladite au moins une bobine définit essentiellement une forme biseauté, de sorte qu'elle est apte à modifier ladite communication entre ladite cavité longitudinale (46) et ladite première cavité (1) par l'intermédiaire de ladite au moins une ouverture latérale (101).

7. Vanne fluidique (50) selon l'une quelconque des revendications précédentes **caractérisée en ce qu'**elle comprend un ressort (9) et **en ce que** la deuxième extrémité (52) dudit membre de vanne (5) est reliée audit corps de vanne (20) par l'intermédiaire dudit ressort (9).

8. Vanne fluidique (50) selon l'une quelconque des revendications précédentes **caractérisée en ce que** ledit pilote (41) mobile est connecté à un ressort (9).

9. Vanne fluidique (50) selon l'une quelconque des revendications précédentes, lorsqu'elle dépend de la revendication 4 **caractérisée en ce que** la troisième cavité (71) est située dans le creux du corps de vanne (20).

10. Vanne fluidique (50) selon l'une quelconque des revendications précédentes, **caractérisée en ce que** la première communication (21) débouche dans la première cavité (1).

11. Vanne fluidique (50) selon l'une des revendications 1-7,9-10, **caractérisée en ce que** la vanne fluidique (50) comprend un ressort reliant ledit pilote (41) mobile à la bobine dudit actionneur solénoïde (40) de sorte que ladite force dudit ressort est apte à modifier au moins partiellement ladite communication entre ladite cavité longitudinale (46) et ladite première cavité (1) par l'intermédiaire de ladite au moins une ouverture latérale (101).

12. Circuit hydraulique pour un équipement d'un aéronef comprenant une vanne fluidique (50) selon l'une quelconque des revendications précédentes

13. Système de pile à combustible comprenant une vanne fluidique (50) selon l'une quelconque des revendications 1 à 11.

14. Turbomachine pour un aéronef comprenant une vanne fluidique (50) selon l'une quelconque des revendications 1 à 11.

15. Aéronef comportant une vanne fluidique (50) selon l'une quelconque des revendications 1 à 11.

## Patentansprüche

1. Flüssigkeitsventil (50) für einen Hydraulikkreislauf einer Ausrüstung eines Flugzeugs und umfassend:
- einen hohlen Ventilkörper (20), umfassend einen Eingang (22), zwei Ausgänge (23) und eine Verbindung (21), die dazu vorgesehen ist, mit einem Außendruck verbunden zu werden;
- eine feste Drosselung (30) in der Verbindung (21),
- einen elektrischen Zylinderspulenaktuator (40), der sich im Hohlbereich des hohlen Ventilkörpers (20) befindet und mindestens eine Spule und eine bewegliche ferromagnetische Vorsteuerung (41) umfasst;
- ein Ventilelement (5), das im Ventilkörper (20) in einer Hauptrichtung (100) beweglich ist, um einen Durchgang zwischen dem Eingang (22) und einem der zwei Ausgänge (23) mindestens teilweise zu verschließen, wobei das Ventilelement (5):
• ein erstes (51) und ein zweites (52) Ende umfasst,
• mindestens teilweise einen ersten (1) und einen zweiten (2) Hohlraum definiert, die sich beiderseits des Ventilelements (5) im Hohlbereich des hohlen Ventilkörpers (20) befinden, wobei der erste (1) bzw. zweite (2) Hohlraum an das erste (51) bzw. an das zweite (52) Ende angrenzen, wobei der erste Hohlraum (1) dazu vorgesehen ist, über die Verbindung (21) mit dem Außendruck verbunden zu werden,
• wobei das Ventilelement (5) einen längslaufenden Hohlraum (46) umfasst, der sich parallel zur Hauptrichtung (100) erstreckt und in den zweiten Hohlraum (2) mündet,
- wobei mindestens ein Abschnitt des Ventilelements (5) ein ferromagnetisches Material umfasst,
- wobei das Ventilelement (5) mindestens eine im Wesentlichen senkrecht zur Hauptrichtung (100) verlaufende seitliche Öffnung (101) umfasst, um den längslaufenden Hohlraum (46) mit dem ersten Hohlraum (1) in Verbindung zu setzen, wobei der längslaufende Hohlraum (46) nicht in den ersten Hohlraum (1) an seinem ersten Ende (51) mündet,
- wobei das Flüssigkeitsventil (50) derart konfiguriert ist, dass eine relative Verschiebung zwischen der beweglichen Vorsteuerung (41) und dem Ventilelement (5) geeignet ist, eine Verbindung zwischen dem längslaufenden Hohlraum (46) und dem ersten Hohlraum (1) über die mindestens eine seitliche Öffnung (101) zu modifizieren, wobei der elektrische Zylinderspulenaktuator (40) vollständig im ersten Hohlraum (1) umfasst ist,
wobei die mindestens eine Spule und die bewegliche Vorsteuerung (41) des elektrischen Zylinderspulenaktuators (40) bei normalem Betrieb des Ventils (50) bei einer oder mehreren Positionen des Ventilelements (5) mindestens einen Abschnitt des Ventilelements (5) umgeben.

2. Flüssigkeitsventil (50) nach dem vorstehenden Anspruch, **dadurch gekennzeichnet, dass** die mindestens eine Spule und die bewegliche Vorsteuerung (41) des elektrischen Zylinderspulenaktuators (40) bei normalen Betrieb des Ventils (50) bei einer oder mehreren Positionen des Ventilelements (5) den mindestens einen Abschnitt des Ventilelements (5), umfassend ein ferromagnetisches Material, umgeben.

3. Flüssigkeitsventil (50) nach einem der vorstehenden Ansprüche, **dadurch gekennzeichnet, dass** es derart konfiguriert ist, dass eine Druckkraft, die geeignet ist, in einer Richtung parallel zur Hauptrichtung (100) auf die bewegliche Vorsteuerung (41) ausgeübt zu werden, nur aus einem Druck innerhalb des ersten Hohlraums (1) resultiert.

4. Flüssigkeitsventil (50) nach einem der vorstehenden Ansprüche, **dadurch gekennzeichnet, dass** es weiter umfasst:
- einen dritten Hohlraum (71), der eine Verbindung (27) aufweist, um ihm fluidisch mit einem dritten Druck zu verbinden, und
- einen Kolben (60), der mechanisch mit dem Ventilelement (5) gekoppelt ist und einen ersten Teil (60a) und einen zweiten Teil (60b) aufweist, wobei der erste Teil (60a) im zweiten Hohlraum (2) ist und sich der zweite Teil (60b) mindestens teilweise derart im dritten Hohlraum (71) befindet, dass eine Verschiebung der beweglichen Vorsteuerung (41) eine Druckschwankung im ersten Hohlraum (1) hervorruft, um eine Verschiebungskraft auf dem Ventilelement (5) zu erzeugen, um zu bewirken, dass ein Flüssigkeitsdurchsatz zwischen dem Eingang (22) und den
zwei Ausgängen (23) schwankt.

5. Flüssigkeitsventil (50) nach einem der vorstehenden Ansprüche, **dadurch gekennzeichnet, dass** eine Verschiebung der beweglichen Vorsteuerung (41) in einer Richtung der Hauptrichtung (100) geeignet ist, die Verbindung zwischen dem längslaufenden Hohlraum (46) und dem ersten Hohlraum (1) über die mindestens eine seitliche Öffnung (101) zu modifizieren, was solchermaßen Druckschwankungen im ersten (1) und zweiten (2) Hohlraum verursacht, dass dies eine Verschiebung des Ventilelements (5) in der Richtung erzeugt.

6. Flüssigkeitsventil (50) nach einem der vorstehenden Ansprüche, **dadurch gekennzeichnet, dass** ein Abschnitt der beweglichen Vorsteuerung, der sich zwischen dem Ventilelement (5) und der mindestens einen Spule befindet, im Wesentlichen eine abgeschrägte Form derart definiert, dass sie geeignet ist, die Verbindung zwischen dem längslaufenden Hohlraum (46) und dem ersten Hohlraum (1) über die mindestens eine seitliche Öffnung (101) zu modifizieren.

7. Flüssigkeitsventil (50) nach einem der vorstehenden Ansprüche, **dadurch gekennzeichnet, dass** es eine Feder (9) umfasst und dadurch, dass das zweite Ende (52) des Ventilelements (5) über die Feder (9) mit dem Ventilkörper (20) verbunden ist.

8. Flüssigkeitsventil (50) nach einem der vorstehenden Ansprüche, **dadurch gekennzeichnet, dass** die bewegliche Vorsteuerung (41) mit einer Feder (9) verbunden ist.

9. Flüssigkeitsventil (50) nach einem der vorstehenden Ansprüche, wenn er von Anspruch 4 abhängt, **dadurch gekennzeichnet, dass** sich der dritte Hohlraum (71) im Hohlbereich des Ventilkörpers (20) befindet.

10. Flüssigkeitsventil (50) nach einem der vorstehenden Ansprüche, **dadurch gekennzeichnet, dass** die erste Verbindung (21) in den ersten Hohlraum (1) mündet.

11. Flüssigkeitsventil (50) nach einem der Ansprüche 1-7, 9-10, **dadurch gekennzeichnet, dass** das Flüssigkeitsventil (50) eine Feder umfasst, die die bewegliche Vorsteuerung (41) mit der Spule des elektrischen Zylinderspulenaktuators (40) derart verbindet, dass die Kraft der Feder geeignet ist, die Verbindung zwischen dem längslaufenden Hohlraum (46) und dem ersten Hohlraum (1) über die mindestens eine seitliche Öffnung (101) mindestens teilweise zu modifizieren.

12. Hydraulikkreislauf für eine Ausrüstung eines Flugzeugs, umfassend ein Flüssigkeitsventil (50) nach einem der vorstehenden Ansprüche.

13. Brennstoffzellensystem, umfassend ein Flüssigkeitsventil (50) nach einem der Ansprüche 1 bis 11.

14. Turbomaschine für ein Flugzeug, umfassend ein Flüssigkeitsventil (50) nach einem der Ansprüche 1 bis 11.

15. Flugzeug, umfassend ein Flüssigkeitsventil (50) nach einem der Ansprüche 1 bis 11.

## Claims

1. Fluid valve (50) for a hydraulic circuit of a piece of equipment of an aircraft and comprising:
- a hollow valve body (20) comprising one inlet (22), two outlets (23) and a communication (21) intended to be connected to an external pressure;
- a fixed restriction (30) in said communication (21),
- a solenoid electric actuator (40) located in the cavity of the hollow valve body (20) and comprising at least one coil and a ferromagnetic mobile driver (41);
- a valve member (5) mobile in the valve body (20) in a main direction (100) to at least partially block a passage between said inlet (22) and one of the two outlets (23), said valve member (5):
• comprising first (51) and second (52) ends,
• defining at least partially first (1) and second (2) cavities located on either side of said valve member (5) in the cavity of the valve body (20), said first (1), respectively second (2) cavity being adjacent to said first (51), respectively second (52) end, said first cavity (1) being intended to be connected to said external pressure via said communication (21),
• said valve member (5) comprising a longitudinal cavity (46) extending parallel to said main direction (100) and leading into said second cavity (2),
- at least one portion of the valve member (5) comprising a ferromagnetic material,
- said valve member (5) comprising at least one side opening (101) essentially perpendicular to said main direction (100), to make said longitudinal cavity (46) communicate with said first cavity (1), said longitudinal cavity (46) not leading into said first cavity (1) at its first end (51),
- the fluid valve (50) being configured such that a relative movement between said mobile controller (41) and said valve member (5) is able to modify a communication between said longitudinal cavity (46) and said first cavity (1) by way of said at least one side opening (101), the solenoid electric actuator (40) being completely comprised in said first cavity (1),
said at least one coil and said mobile controller (41) of the solenoid electric actuator (40) surrounding at least one portion of the valve member (5) for one or more positions of said valve member (5) in normal operation of the valve (50).

2. Fluid valve (50) according to the preceding claim, **characterised in that** said at least one coil and said mobile controller (41) of the solenoid electric actuator (40) surround said at least one portion of the valve member (5) comprising a ferromagnetic material, for one or more positions of said valve member (5) in normal operation of the valve (50).

3. Fluid valve (50) according to any one of the preceding claims, **characterised in that** it is configured such that a pressure force makes it possible to be exerted on the mobile controller (41) in a direction parallel to the main direction (100) only results from a pressure within the first cavity (1).

4. Fluid valve (50) according to any one of the preceding claims, **characterised in that** it further comprises:
- a third cavity (71) having a communication (27) to fluidly connect it to a third pressure, and
- a piston (60) mechanically coupled to the valve member (5) and having a first part (60a) and a second part (60b), the first part (60a) being in the second cavity (2), and the second part (60b) being located at least partially in the third cavity (71), such that a movement of said mobile controller (41) induces a pressure variation in the first cavity (1) to create a movement force on said valve member (5) to make a fluid flow rate vary between the inlet (22) and the
two outlets (23).

5. Fluid valve (50) according to any one of the preceding claims, **characterised in that** a movement of the mobile controller (41) in a direction of said main direction (100) makes it possible to modify said communication between said longitudinal cavity (46) and said first cavity (1) by way of said at least one side opening (101) leading to pressure variations in said first (1) and second (2) cavities such as this causes a movement of said valve member (5) in said direction.

6. Fluid valve (50) according to any one of the preceding claims, **characterised in that** a portion of said mobile controller located between said valve member (5) and said at least one coil mainly defines a bevelled shape, such that it makes it possible to modify said communication between said longitudinal cavity (46) and said first cavity (1) by way of said at least one side opening (101).

7. Fluid valve (50) according to any one of the preceding claims, **characterised in that** it comprises a spring (9) and **in that** the second end (52) of said valve member (5) is connected to said valve body (20) by way of said spring (9).

8. Fluid valve (50) according to any one of the preceding claims, **characterised in that** said mobile controller (41) is connected to a spring (9).

9. Fluid valve (50) according to any one of the preceding claims, when it depends on claim 4, **characterised in that** the third cavity (71) is located in the cavity of the valve body (20).

10. Fluid valve (50) according to any one of the preceding claims, **characterised in that** the first communication (21) leads into the first cavity (1).

11. Fluid valve (50) according to one of claims 1-7, 9-10, **characterised in that** the fluid valve (50) comprises a spring connecting said mobile controller (41) to the coil of said solenoid actuator (40), such that said force of said spring makes it possible to modify at least partially said communication between said longitudinal cavity (46) and said first cavity (1) by way of said at least one side opening (101).

12. Hydraulic circuit for a piece of equipment of an aircraft comprising a fluid valve (50) according to any one of the preceding claims.

13. Fuel cell system comprising a fluid valve (50) according to any one of claims 1 to 11.

14. Turbine engine for an aircraft comprising a fluid valve (50) according to any one of claims 1 to 11.

15. Aircraft comprising a fluid valve (50) according to any one of claims 1 to 11.
